# EUROPEAN PATENT SPECIFICATION

(11) **EP 0 897 165 B1**
(45) Date of publication and mention of the grant of the patent: **28.05.2003**
(21) Application number: 98302493.6
(22) Date of filing: 31.03.1998
(51) Int. Cl.: G07D 7/00, G07F 7/10

(54) **Automatic transaction apparatus**
Vorrichtung für automatische Transaktionen
Dispositif de transaction automatique

(30) Priority: 14.08.1997 JP 21937497
(43) Date of publication of application: 17.02.1999
(73) Proprietor: FUJITSU LIMITED, Kawasaki-shi, Kanagawa 211-8588 (JP)
(72) Inventor: Ochiai, Satoru, Nakahara-ku, Kawasaki-shi, Kanagawa 211 (JP); Imai, Masayuki, Nakahara-ku, Kawasaki-shi, Kanagawa 211 (JP); Kurihara, Makoto, Nakahara-ku, Kawasaki-shi, Kanagawa 211 (JP); Imahayashi, Takehiro, Nakahara-ku, Kawasaki-shi, Kanagawa 211 (JP); Oikawa, Shuetsu, Nakahara-ku, Kawasaki-shi, Kanagawa 211 (JP); Ozaki, Michiyasu, Nakahara-ku, Kawasaki-shi, Kanagawa 211 (JP); Saito, Katsumasa, Nakahara-ku, Kawasaki-shi, Kanagawa 211 (JP); Ikoma, Kazuya, Nakahara-ku, Kawasaki-shi, Kanagawa 211 (JP)
(74) Representative: Stebbing, Timothy Charles

(56) References cited:
- EP-A- 0 535 417
- EP-A- 0 632 415
- DE-U- 9 405 067
- GB-A- 2 270 904
- JP-A- 57 131 771
- US-A- 4 602 149
- PATENT ABSTRACTS OF JAPAN vol. 018, no. 235 (P-1732), 28 April 1994 (1994-04-28) & JP 06 020131 A (FUJITSU LTD), 28 January 1994 (1994-01-28)

## Description

The present invention relates to an automatic transaction apparatus for allowing users or customers to deposit money in the form of financial documents such as checks, and more particularly to an automatic transaction apparatus for automatically settling deposits when operated by customers.

Financial institutions find a wide use of automatic transaction apparatus. Automatic transaction apparatus are operated by customers to automatically make deposits and withdrawals. In Europe and America, it is popular to deposit money in the form of checks in banking and financial institutions. Since checks are manually processed in back offices, it requires a large expenditure of personnel expenses to process checks. For this reason, there has been a demand for automatic transaction apparatus with an ability to automatically process checks.

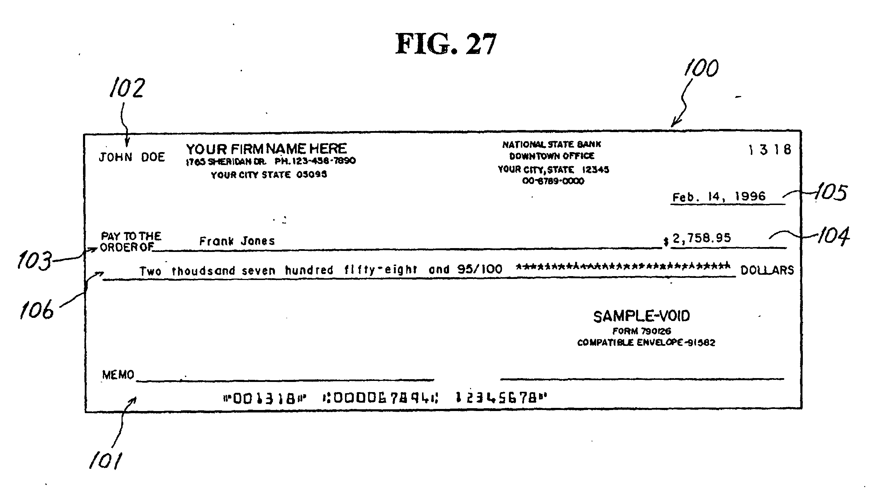

Fig. 27 of the accompanying drawings illustrates a check.

For depositing a check in an automatic transaction apparatus, the customer first puts the check into an envelope, and then inserts the envelope into the automatic transaction apparatus. The envelope collected from the automatic transaction apparatus is opened in a back office. After the check removed from the envelope is received, its sum is confirmed, and an MICR (magnetic ink character recognition) mark is manually printed in the sum column. Then, the check is processed by a check processing apparatus.

Because the automatic transaction apparatus is automatized to only receive checks, the checks received by the automatic transaction apparatus need to be manually processed in the back office. Furthermore, it will take some time to cash the checks due to a time-consuming check settling process.

Attempts have heretofore been made to add a check processing capability to automatic transaction apparatus. The face of a check of the type which is widely used is shown in Fig. 27. As shown in Fig. 27, a check 100 has on a lower portion of its face an MICR column 101 marked with MICR numerals printed in a magnetic ink which are representative of the code of a banking institution which has issued the check, the code of the issuer, and an issuance serial number.

The check 100 also carries on an upper portion of its face the name 102 of the issuer and a date 105 of issuance, and on a middle portion of its face the name 103 of a party to which the check is payable, the sum 104 to be paid which is expressed by numerals, and the sum 106 to be paid which is expressed by alphabetical letters.

An automatic transaction apparatus for automatically processing the check 100 has a reading unit and a printing unit. The reading unit comprises an image reader and a magnetic head. The image reader optically reads the face of the check 100 which has been inserted by the customer, and recognizes the numerals of the sum 104. The magnetic head recognizes the banking institution which has issued the check, the issuer, and the issuance serial number.

The automatic transaction apparatus sends the recognized data to a host computer. The host computer settles the check 100 and transfers settled data back to the automatic transaction apparatus. In the automatic transaction apparatus, an MICR encoder of the printing unit prints a settled sum in the MICR column 101 of the check 100. The printing unit also prints the data of transaction and the account number on the check 100. The automatic transaction apparatus then stores the check 100.

In this manner, the automatic transaction apparatus automatically processes checks with the reading unit and the printing unit.

Checks have face and back sides and different orientations. Therefore, checks may be inserted into automatic transaction apparatus with the face side or the back side up and/or in different orientations. Heretofore, automatic transaction apparatus are required to have a plurality of reading units and a plurality of printing units in order to cope with the different patterns in which checks are inserted into the automatic transaction apparatus. Accordingly, the automatic transaction apparatus have been large in size because of a complex and large check deposition mechanism that is required.

If a check deposition mechanism has a single reading unit and a single printing unit, then it additionally needs a complex reversal mechanism for bringing the faces of inserted checks in one direction and a complex aligning mechanism for orienting inserted checks in alignment for processing. These additional mechanisms tend to increase the time required for checks to be properly deposited in the automatic transaction apparatus, and are also liable to cause an inserted check to be jammed. These problems have prevented users from relying on the automatic transaction apparatus in depositing checks.

EP-A-0 632 415 discloses an automatic transaction apparatus (ATA) according to the preamble of claim 1. In this ATA, a document entry slot is provided for insertion of cheques and bills to be settled. A display screen is provided within a recess adjacent the document entry slot, for performing transactions with a user.

EP-A-0 535 417 discloses an ATA including various apertures for input or output of objects used during a transaction, including a currency dispenser aperture, a card aperture, and a receipt aperture. Illuminating means provide lighted user prompts indicating which aperture is involved in the next user activity.

DE 9405067U depicts the front panel of a Siemens HiMed-Kassenautomat, showing an insertion slot for a Siemens HiMed-Karte with a pictorial representation of the card underneath the slot. The pictorial representation includes an arrow to indicate the correct direction of insertion of the card.

US-A-4 602 149 discloses an ATA having separate insertion slots for cash and an envelope containing cash or checks, respectively.

GB-A-2 270 904 discloses a bill receiving and feeding-out apparatus capable of discriminating the genuineness, denomination and orientation of received bank notes.

According to the present invention, there is provided an automatic transaction apparatus acc. to claim 1.

An embodiment of the present invention may provide an automatic transaction apparatus having a relatively simple check deposition mechanism for automatically processing financial documents that are deposited.

An embodiment of the present invention may also provide an automatic transaction apparatus having a relatively small check deposition mechanism for automatically processing financial documents that are deposited.

An embodiment of the invention may further provide an automatic transaction apparatus which is capable of allowing financial documents to be deposited in a relatively short period of time.

The guidance means, which is disposed in the depository inlet, indicates a pattern in which to insert the financial document into the depository inlet. Therefore, when the user inserts the financial document according to the pattern indicated by the guidance means, the financial document can be inserted with its sides properly directed and in a proper orientation into the depository inlet.

Since the financial document is properly inserted into the automatic transaction apparatus, they can automatically be deposited by a relatively simple deposition mechanism which includes the reading means and the printing means. The deposition mechanism may be relatively small in size, preventing the automatic transaction apparatus from having an increased size.

The automatic transaction apparatus can process deposits in the form of financial documents in a relatively short period of time for the convenience of users.

The accompanying drawings, which are incorporated in and constitute a part of the specification, illustrate presently preferred embodiments of the invention, and together with the general description given above and the detailed description of the preferred embodiments given below, serve to explain the principle of the invention, in which:
Fig. 1 is a front elevational view of an automatic transaction apparatus according to an embodiment of the present invention;
Fig. 2 is a cross-sectional view of a check deposition mechanism of the automatic transaction apparatus shown in Fig. 1;
Fig. 3 is an enlarged fragmentary cross-sectional view of the check deposition mechanism shown in Fig. 2;
Fig. 4 is a fragmentary plan view of a depository structure of the check deposition mechanism shown in Fig. 2;
Figs. 5A and 5B are side elevational views of a thickness detector of the check deposition mechanism shown in Fig. 2;
Figs. 6A and 6B are front and side elevational views of a transverse shifting mechanism of the check deposition mechanism shown in Fig. 2;
Fig. 7 is a plan view of a transverse shift detecting mechanism of the check deposition mechanism shown in Fig. 2;
Fig. 8 is a plan view illustrating the manner in which the transverse shift detecting mechanism shown in Fig. 7 operates;
Fig. 9 is a front elevational view of a feed roller of the check deposition mechanism shown in Fig. 2;
Fig. 10 is a side elevational view of a storage mechanism of the check deposition mechanism shown in Fig. 2;
Fig. 11 is a side elevational view of a storage gate mechanism of the storage mechanism shown in Fig. 10;
Fig. 12 is a side elevational view illustrating the manner in which the storage mechanism shown in Fig. 10 operates;
Fig. 13 is a side elevational view of a reversal mechanism of the check deposition mechanism shown in Fig. 2;
Fig. 14 is a side elevational view illustrating the manner in which the reversal mechanism shown in Fig. 13 operates;
Fig. 15 is a block diagram of a system arrangement of the automatic transaction apparatus shown in Fig. 1;
Fig. 16 is a block diagram of a deposition processing unit of the system arrangement shown in Fig. 15;
Figs. 17 and 18 are flowcharts of an operation sequence of the system arrangement shown in Fig. 15;
Fig. 19 is a view showing a transaction selection image displayed in the operation sequence shown in Fig. 17;
Fig. 20 is a view showing a deposition type selection image displayed in the operation sequence shown in Fig. 17;
Fig. 21 is a view showing a check insertion guidance image displayed in the operation sequence shown in Fig. 17;
Fig. 22 is a view showing a sum entrance guidance image displayed in the operation sequence shown in Fig. 18;
Fig. 23 is a view of a check used in the automatic transaction apparatus shown in Fig. 1;
Fig. 24 is a fragmentary plan view of a depository structure according to another embodiment of the present invention;
Fig. 25 is a front elevational view of the depository structure shown in Fig. 24;
Fig. 26A is a cross-sectional view taken along line 26A - 26A of Fig. 25;
Fig. 26B is a cross-sectional view taken along line 26B - 26B of Fig. 25; and
Fig. 27 is a view of a check used in conjunction with conventional automatic transaction apparatus.

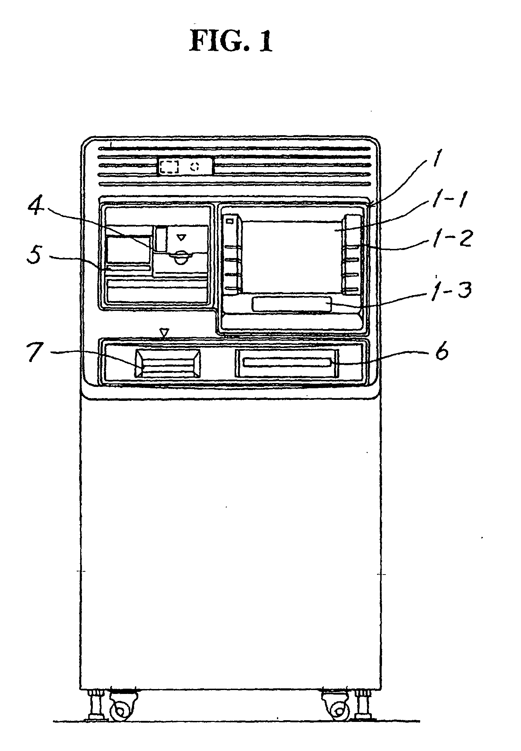

As shown in Fig. 1, an automatic transaction apparatus according to an embodiment of the present invention has a customer-operated console 1 including a display unit 1-1 for displaying images for guiding customers or users to operate the automatic transaction apparatus, an array of switches 1-2 for selecting items in displayed images, and an array of input keys 1-3 for entering a password, a sum, etc. The automatic transaction apparatus also has a card processing unit 4 for receiving and reading a user's card, and returning the user's card after a transaction is finished.

The automatic transaction apparatus further includes an envelope discharger 5 for discharging an envelope when the user selects a deposition using an envelope, a withdrawal processing unit 6 for discharging an indicated sum of cash when the user selects a withdrawal, and a depository inlet 7 having an inlet slot for receiving an envelope or a check which is inserted by the user for a deposit.

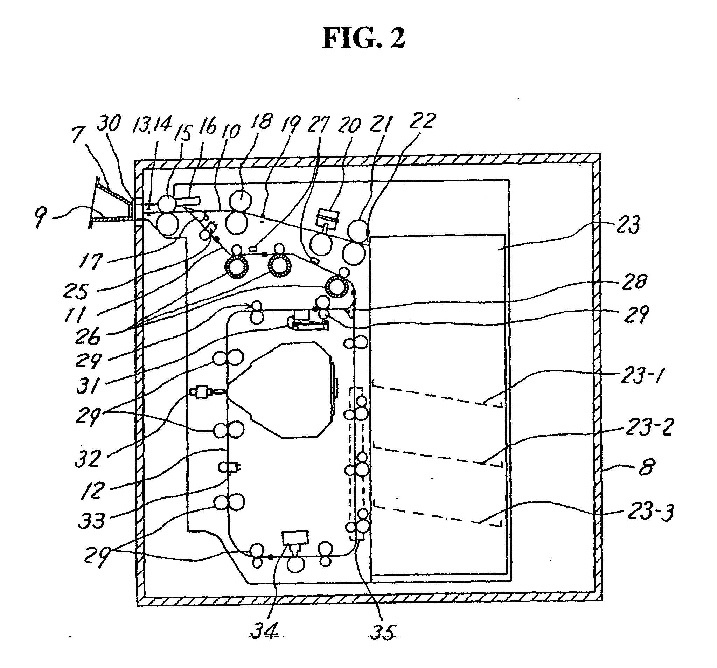

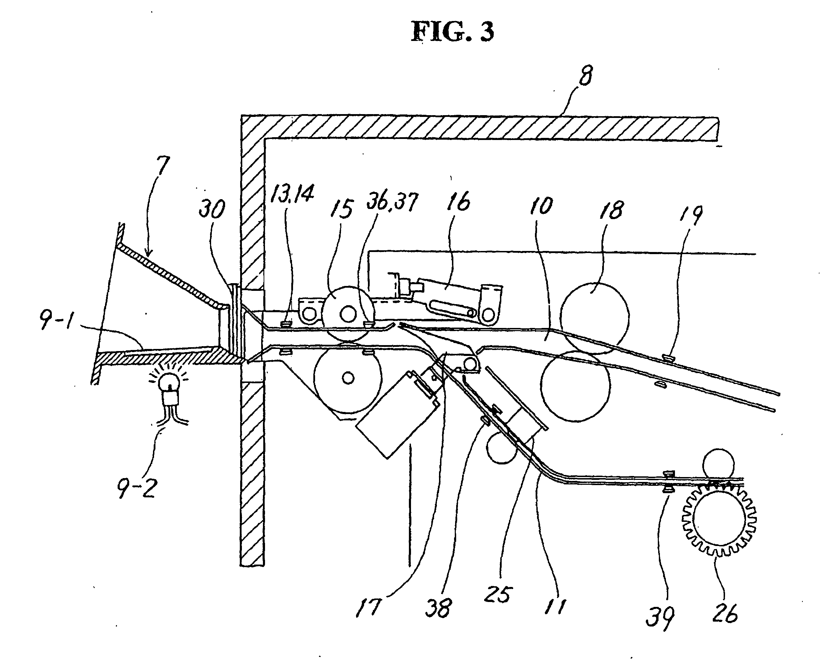

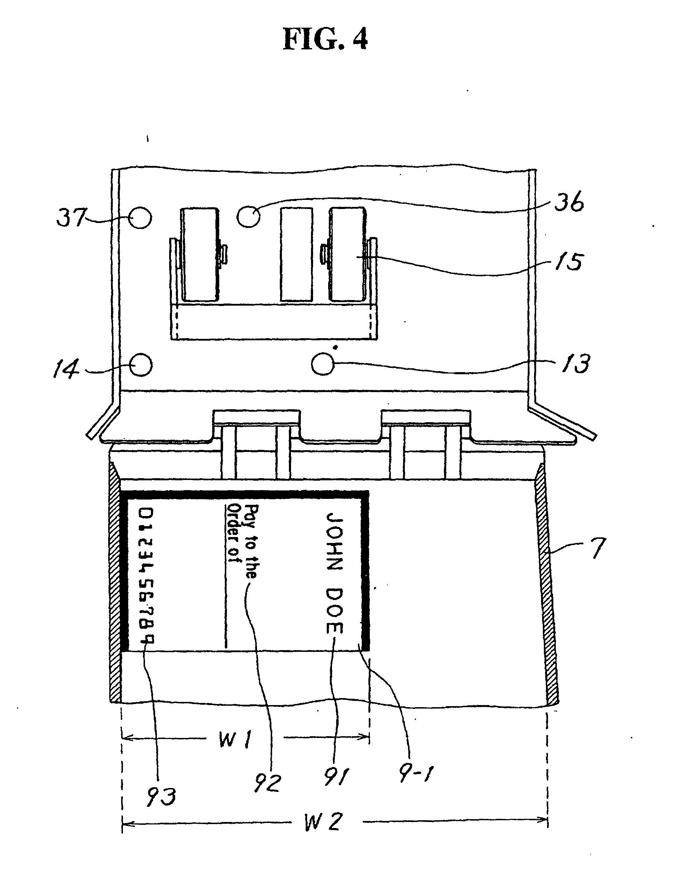

Fig. 2 shows a check deposition mechanism of the automatic transaction apparatus shown in Fig. 1. Fig. 3 shows the check deposition mechanism, and Fig. 4 shows the depository inlet 7.

As shown in Figs. 2 and 3, the depository inlet 7 serves to receive both an envelope and a check that are inserted from outside of a safe 8. As shown in Fig. 4, the depository inlet 7 has a width W2 equal to the width of envelopes that are used in connection with the automatic transaction apparatus. The depository inlet 7 includes a guidance mechanism 9 which comprises an insertion guidance panel 9-1 and a backlight lamp 9-2 positioned underneath the insertion guidance panel 9-1.

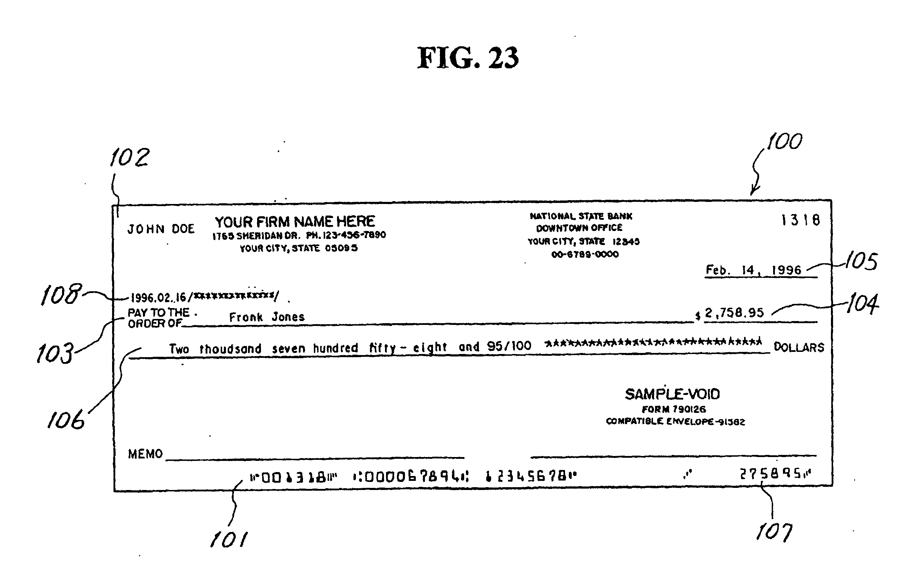

The insertion guidance panel 9-1 has a width W1 equal to the width of personal checks that are used most often in connection with the automatic transaction apparatus. The insertion guidance panel 9-1 is positioned such that its left edge, as viewed from above, is aligned with the left edge of the depository inlet 7. The insertion guidance panel 9-1 indicates thereon a pattern on the face of a personal check 100 (see Fig. 23). Specifically, the insertion guidance panel 9-1 indicates thereon a column 91 showing an issuer's name, a column 92 showing a party to which the check is payable, and an MICR column 93.

These columns 91, 92, 93 indicated on the insertion guidance panel 9-1 serve to guide the user to insert the check 100 with its face side up in a direction which is a longitudinal direction of the check 100, and also guide the user to insert the check 100 at a left-hand side of the depository inlet 7. Since the user is guided by the insertion guidance panel 9-1 as to how to insert the check 100 into the depository inlet 7, the check deposition mechanism of the automatic transaction apparatus may be relatively simple in construction and can process inserted checks within a relatively short period of time.

As shown in Figs. 2 and 3, the depository inlet 7 is associated with a pair of laterally spaced transmissive sensors 13, 14, a plurality of reception rollers 15, a thickness detector 16, and a pair of laterally spaced transmissive sensors 36, 37. As shown in Fig. 4, the transmissive sensors 13, 14 serve to detect the width of a medium (either an envelope or a check) which has been inserted from the depository inlet 7. If a medium whose width is smaller than the distance between the transmissive sensors 13, 14 is inserted, then the inserted medium is returned to the depository inlet 7 by the reception rollers 15 that are rotated in response to a signal from the transmissive sensors 13, 14.

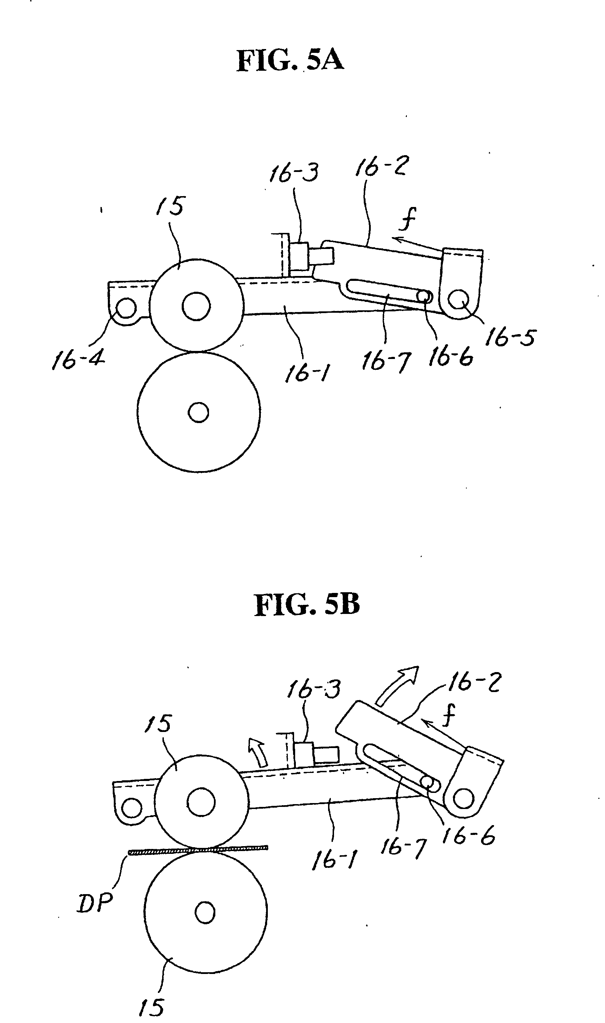

The thickness detector 16 serves to detect the thickness of a medium which has been inserted from the depository inlet 7, as described later on with respect to Figs. 5A and 5B. If an inserted medium has a thickness greater than a predetermined thickness as detected by the thickness detector 16 when a check deposition mode has been selected, then the inserted medium is returned to the depository inlet 7 by the reception rollers 15 that are rotated in response to a signal from the thickness detector 16.

As shown in Fig. 4, the transmissive sensors 13, 36, 37 jointly serve to detect the skew of an inserted medium. If the skew of an inserted medium is greater than a predetermined angle as detected by the transmissive sensors 13, 36, 37, then the inserted medium is returned to the depository inlet 7 by the reception rollers 15 that are rotated in response to a signal from the transmissive sensors 13, 36, 37.

As shown in Figs. 2 and 3, a selector lever 17 is positioned immediately downstream of the transmissive sensors 36, 37 for selecting an envelope feed path 10 or a check feed path 11. The envelope feed path 10 is associated with a plurality of feed rollers 18, 21, a pair of transmissive sensors 19, 22, and a printing mechanism (envelope printer) 20 for printing reception information on an inserted envelope.

In an envelope deposition mode, an envelope inserted from the depository inlet 7 is introduced into the envelope feed path 10 selected by the selector lever 17, and then printed by the printing mechanism 20. Thereafter, the printed envelope is stored in a storage bin 23. If the transmissive sensor 20 is turned on when the transmissive sensor 13 is turned off, it is determined that the length of the inserted envelope exceeds a maximum limit, and the inserted envelope is returned to the depository inlet 7. If the transmissive sensor 19 is not turned on when the transmissive sensor 13 is turned off, it is determined that the length of the inserted envelope is smaller than a minimum limit, and the inserted envelope is returned to the depository inlet 7.

As shown in Fig. 3, the check feed path 11 is associated with a magnetic sensor 25, a pair of transmissive sensors 38, 39, a plurality of transverse shifting rollers 26, and a pair of transverse shift detecting mechanisms 27. The magnetic sensor 25 serves to detect whether there are MICR characters preprinted on an inserted check 100. If the magnetic sensor 25 does not detect MICR characters, then the inserted check 100 is returned to the depository inlet 7.

The magnetic sensor 25 does not detect MICR characters when a check has been inserted in a wrong orientation or when a check with no preprinted MICR characters has been inserted. Since a check that has been inserted in a wrong orientation is also returned, the user can recognize the proper orientation in which the check has to be inserted.

If the transmissive sensor 39 is turned on when the transmissive sensor 13 is turned off, it is determined that the length of the inserted check exceeds a maximum limit, and the inserted check is returned to the depository inlet 7. If the transmissive sensor 38 is not turned on when the transmissive sensor 13 is turned off, it is determined that the length of the inserted check is smaller than a minimum limit, and the inserted check is returned to the depository inlet 7.

When the check is thus returned, a message indicating why the check is returned is visibly displayed on the display unit 1-1 and also audibly announced, prompting the user to insert the check properly. Inasmuch as the manner in which the user has inserted the check is checked before the check is processed by the automatic transaction apparatus, the check that has been inserted in a proper orientation can be delivered to the check deposition mechanism.

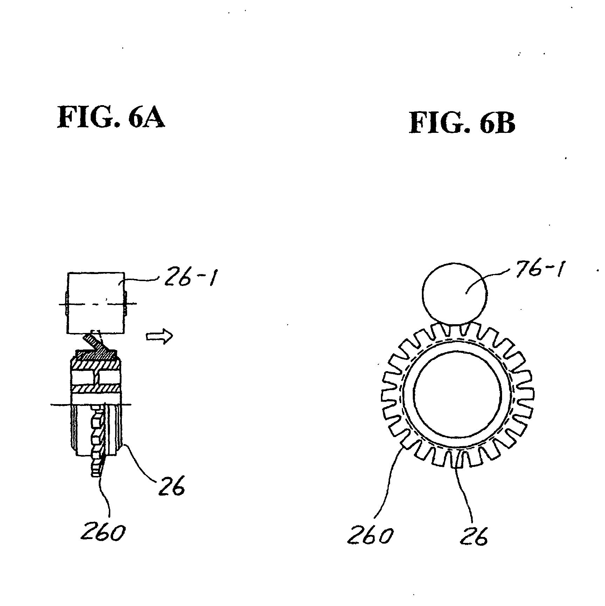

The transverse shifting rollers 26 serve to feed the check 100 along the check feed path 11 and also to transversely shift the check 100 strongly against respective reference guides. There are three transverse shifting rollers 26 spaced along the check feed path 11. The transverse shifting rollers 26 will be described in detail later on with reference to Figs. 6A and 6B.

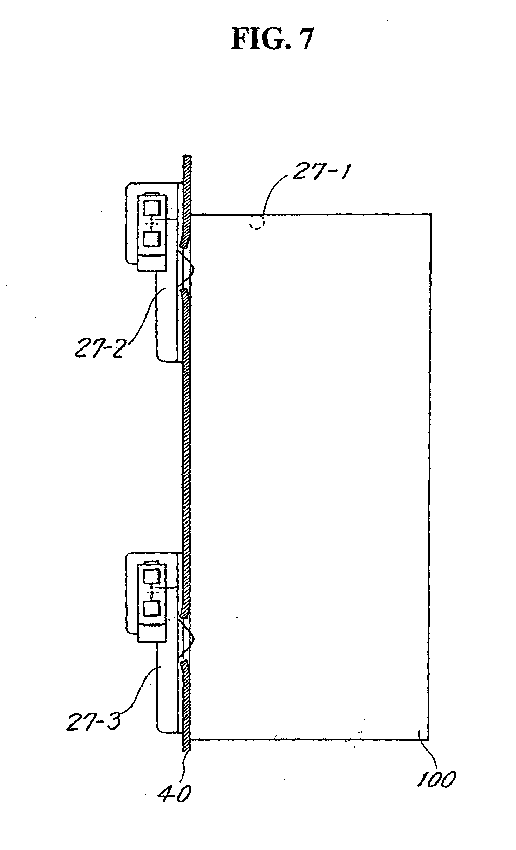

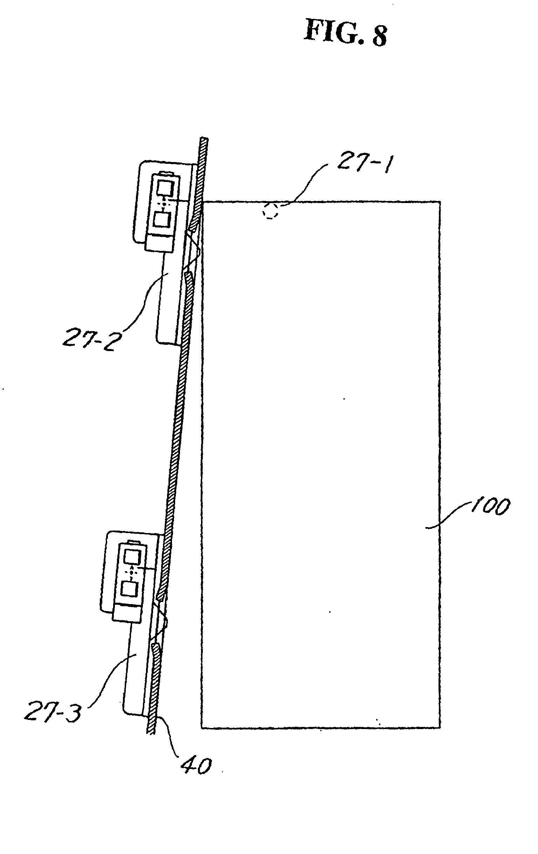

Each of the transverse shift detecting mechanisms 27 detects whether a check 100 has been transversely shifted against the reference guide or not. If the transverse shift detecting mechanism 27 detects that the check 100 has not been transversely shifted against the reference guide, then the transverse shifting roller 26 which is associated with the transverse shift detecting mechanism 27 re-tries to feed the check 100. Specifically, the transverse shifting roller 26 feeds the check 100 backward, and then transversely shifts the check 100 while feeding it forward. The transverse shifting roller 26 re-tries to feed the check 100 until the transverse shift detecting mechanism 27 detects that the check 100 has been transversely shifted against the reference guide. The transverse shift detecting mechanisms 27 will be described in detail later on with reference to Figs. 7 and 8.

The check feed path 11 serves as a first feed path for detecting and transversely shifting a check. The first feed path 11 is connected to a second feed path 12 at a switching gate 28 (see Fig. 1), described later on. The second feed path 12 is shaped like a loop path.

The second feed path 12 is associated with a plurality of feed rollers 29, an image reader 31, an encoder 32, a magnetic reader 33, a printing mechanism 34, a storage mechanism 35, and a switching gate 28.

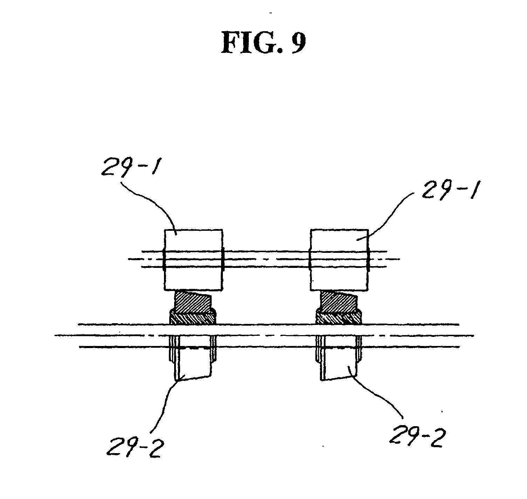

The feed rollers 29 feed a check 100 while applying weak forces tending to transversely shift the check 100. The feed rollers 29 will be described in detail later on with reference to Fig. 9. After the check 100 has been transversely shifted in the first feed path 11, the feed rollers 29 keep the check 100 transversely shifted under the weak forces which are applied to the check 100 by the feed rollers 29.

The image reader 31 optically reads one side of the check 100. The encoder 32 prints information with magnetic ink in the MICR column 101 of the check 100. The magnetic reader 33 reads the information printed in the MICR column 101 of the check 100. The printing mechanism 34 prints reception information (AUDIT) and endorsing information (ENDORSEMENT) on the check 100.

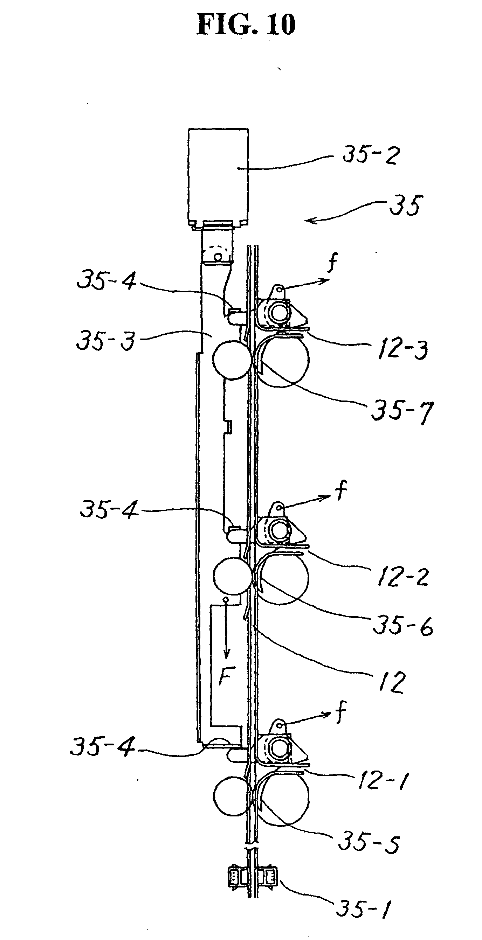

The storage mechanism 35 stores the check 100 in the second feed path 12 into a specified storage chamber in the storage bin 23. The storage bin 23 is compartmented into an envelope storage chamber and three check storage chambers by a plurality of partition trays 23-1 - 23-3. The storage mechanism 35 will be described in detail later on with reference to Figs. 10, 11, and 12.

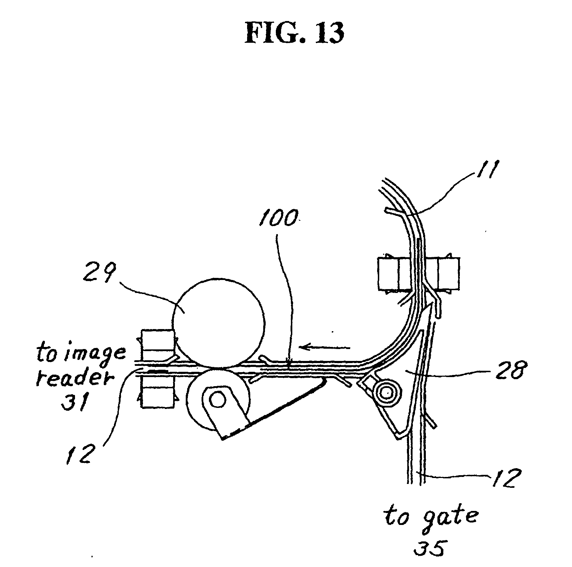

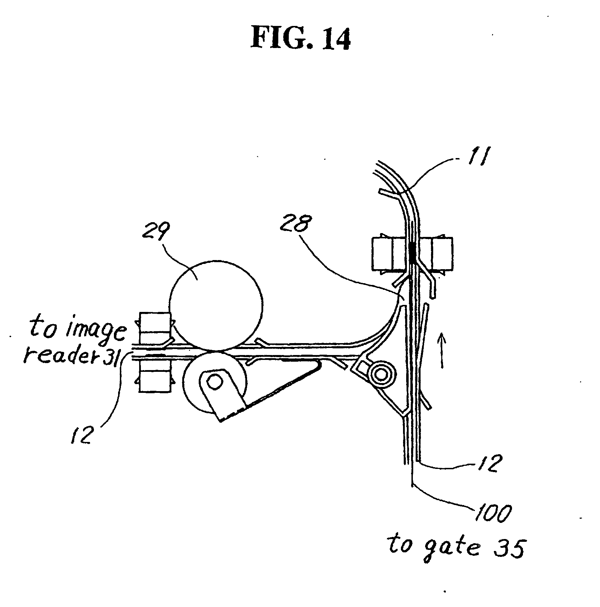

For endorsing the check 100, it is necessary to reverse the check 100 upside down. The switching gate 28 introduces the check 100 from the first feed path 12 into the second feed path 11 and then delivers the check 100 from the second feed path 12 back into the first feed path 11, for reversing the check 100 upside down. A reversal mechanism which includes the switching gate 28 will be described in detail later on with reference to Figs. 13 and 14.

The various components of the automatic transaction apparatus will be described below with reference to Figs. 5A, 5B through 14.

As shown in Fig. 5A, the thickness detector 16 has a pair of first and second levers 16-1, 16-2 and a photointerrupter 16-3. The first lever 16-1 is rotatable about a pivot 16-4 at one end thereof. The reception rollers 15 are rotatably supported on the first lever 16-1. A guide rod 16-6 is mounted on an end of the first lever 16-1 remote from the pivot 16-4.

The second lever 16-2 is rotatable about a pivot 16-5 at one end thereof, and has a guide groove 16-7 defined therein intermediate between its opposite ends. The guide rod 16-6 on the first lever 16-1 is movably guided in the guide groove 16-7. The second lever 16-2 has an end remote from the pivot 16-5 for blocking a light path of the photointerrupter 16-3. The second lever 16-2 is normally urged to turn in the direction indicated by the arrow "f" by a spring (not shown).

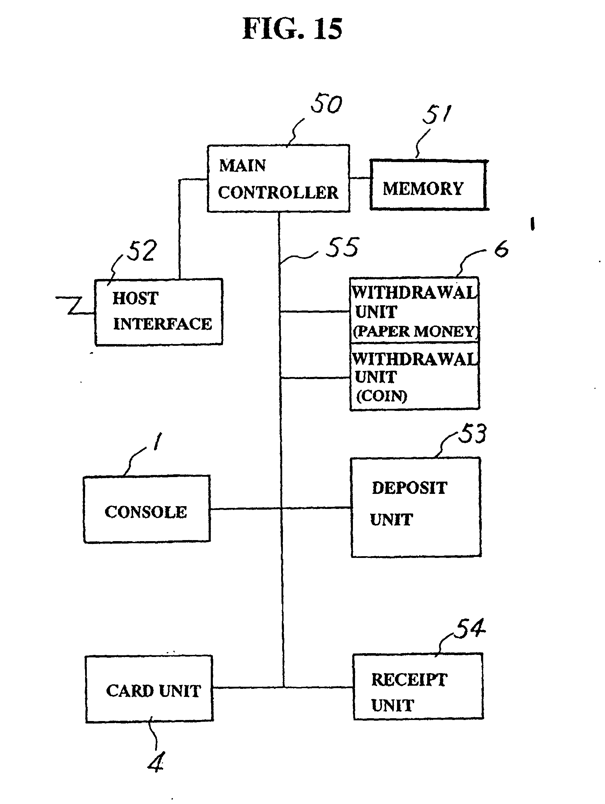

When no medium is sandwiched by the reception rollers 15 as shown in Fig. 15A, the end of the second lever 16-2 blocks the light path of the photointerrupter 16-3. When a medium is sandwiched by the reception rollers 15 as shown in Fig. 5B, the first lever 16-1 is turned about the pivot 16-4, causing the second lever 16-2 to be turned about the pivot 16-5.

If the thickness of the medium is greater than a predetermined thickness, then the second lever 16-2 is angularly moved to displace its end out of the light path of the photointerrupter 16-3. The thickness detector 16 is capable of detecting that an inserted medium has a thickness greater than a predetermined thickness of 0.5 mm, for example, when in the check deposition mode. The thickness detector 16 is of a small size, yet can amplify the thickness of an inserted medium.

As shown in Figs. 6A and 6B, each of the transverse shifting rollers 26 has a petal-shaped radial transverse shifter 260 on its outer circumferential edge. As shown in Fig. 6A, the petal-shaped radial transverse shifter 260 flexes radially inwardly by contact with a facing roller 26-1. Under the resiliency of the petal-shaped radial transverse shifter 260 which has thus flexed, the petal-shaped radial transverse shifter 260 applies forces tending to transversely shift the check 100 in the direction indicated by the arrow perpendicularly to the direction in which the check 100 is fed. Each of the transverse shifting rollers 26 is thus relatively simple in structure, but capable of transversely shifting the check 100 strongly.

As shown in Fig. 7, each of the transverse shift detecting mechanisms 27 comprises a photosensor 27-1 for detecting a check 100 and a pair of sensors 27-2, 27-3 mounted on a reference guide 40 disposed on one side of the photosensor 27-1.

When the check 100 is properly transversely shifted against the reference guide 40 as shown in Fig. 7, all the sensors 27-1, 27-2, 27-3 are turned on. When the check 100 is not properly transversely shifted against the reference guide 40 as shown in Fig. 8, either one of the sensors 27-1, 27-2, 27-3 is turned off. Therefore, the sensors 27-1, 27-2, 27-3 are capable of detecting whether the check 100 is completely transversely shifted against the reference guide 40.

As shown in Fig. 9, each of the feed rollers 29 associated with the second feed path 12 comprises a pair of feed rollers 29-2 each having a frustoconical cross section and a pair of facing rollers 29-1 held in rolling contact with the feed rollers 29-2, respectively, for feeding a check 100 sandwiched therebetween. The feed rollers 29-2 each having a frustoconical cross section are capable of applying weak transversely shifting forces to the check 100. Consequently, the check 100 that has been transversely shifted in the first feed path 11 remain transversely shifted in the second feed path 12.

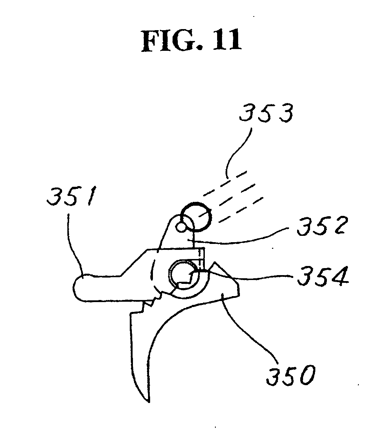

As shown in Fig. 10, the storage mechanism 35 has a plurality of vertically spaced storage passages 12-1, 12-2, 12-3 branched horizontally from the second feed path 12 and connected to the check storage chambers, respectively. The storage passages 12-1, 12-2, 12-3 have respective storage gate mechanisms 35-5, 35-6, 35-7. As shown in Fig. 11, each of the storage gate mechanisms 35-5, 35-6, 35-7 has a lever 351 rotatable about a shaft 354 and a gate 350 mounted on the lever 351.

A hook 352 is mounted on the lever 351 and connected to a spring 353, which normally urges to turn the lever 351 and the gate 350 counterclockwise about the shaft 354 under weak forces.

As shown in Fig. 10, the storage mechanism 35 also includes an actuation lever 35-3 vertically connected at one end thereof to a solenoid 35-2. The actuation lever 35-3 has three vertically spaced abutments 35-4. The actuation lever 35-3 is normally urged to move downwardly in the direction indicated by the arrow F. A transmissive sensor 35-1 is positioned at an inlet end of the storage mechanism 35.

When the solenoid 35-2 is not energized, the actuation lever 35-3 is displaced downwardly in the direction indicated by the arrow F. Therefore, the levers 351 of the gate mechanisms 35-5, 35-6, 35-7 abut against the respective abutments 35-4 of the actuation lever 35-3, retracting the respective gates 350 out of the second feed path 12.

When the solenoid 35-2 is energized, the actuation lever 35-3 is pulled upwardly, releasing the levers 351 out of abutting engagement with the respective abutments 35-4 of the actuation lever 35-3. The gates 350 of the gate mechanisms 35-5, 35-6, 35-7 are now turned to project into the second feed path 12. After a check 100 fed along the second feed path 12 upwardly into the storage mechanism 35 has passed the transmissive sensor 35-1, the solenoid 35-2 is energized at such a time as to deliver the check 100 into one of the storage passages 12-1, 12-2, 12-3.

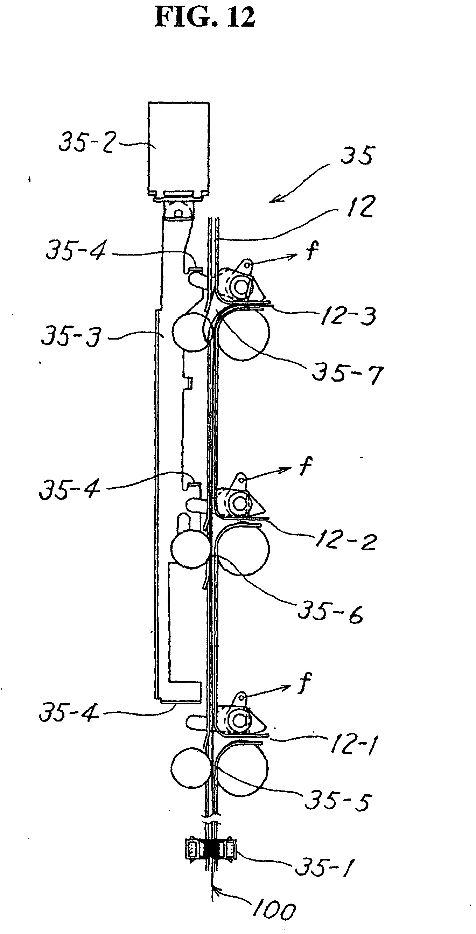

The solenoid 35-2 is energized at the time the check 100 passes the gate mechanism 35-6 after having passed the transmissive sensor 35-1, as shown in Fig. 12. The gate 351 of the gate mechanism 35-7 projects into the second feed path 12, deflecting the check 100 into the storage passage 12-3. At this time, the gates 351 of the gate mechanism 35-5, 35-6 tend to turn, but are actually prevented from turning by the check 100 in the second feed path 12.

Under the bias of the springs 353, the gates 351 of the gate mechanism 35-5, 35-6 exert weak pressing forces to the check 100. However, the weak pressing forces applied to the check 100 are not strong enough to prevent the check 100 from moving through the second feed path 12.

Since the check 100 can be delivered selectively into the storage passages 12-1, 12-2, 12-3 by the single solenoid 35-2, the storage mechanism 35 may be relatively simple in structure.

The reversal mechanism which includes the switching gate 28 will be described below with reference to Figs. 13 and 14. For endorsing a check 100 with the printing mechanism 34 in the second feed path 12, it is necessary to reverse the check 100 upside down so that the back side of the check 100 will be printed by the printing mechanism 34. The switching gate 28 is angularly shifted to one side to introduce the check 100 from the first feed path 11 into the image reader 31 in the second feed path 12, as shown in Fig. 13, and angularly shifted to the other side to introduce the check 100 from the storage mechanism 35 in the second feed path 12 back into the first feed path 11, as shown in Fig. 14.

After the check 100 from the storage mechanism 35 in the second feed path 12 is fed back into the first feed path 11 through the switching gate 28, as shown in Fig. 14, the switching gate 28 is angularly moved back and the check 100 is fed back. The check 100 is now fed from the first feed path 11 into the image reader 31 in the second feed path 12.

Because the check 100 has traveled through the looped second feed path 12 once, the check 100 has now been reversed upside down and hence can be endorsed by the printing mechanism 34. The check 100 introduced from the first feed path 11 into the second feed path 12 can be reversed upside down by circulating once through the second feed path 12 into the first feed path 11 and then traveling back from the first feed path 11 into the second feed path 12. Accordingly, the reversal mechanism itself may be relatively small in size and simple in structure.

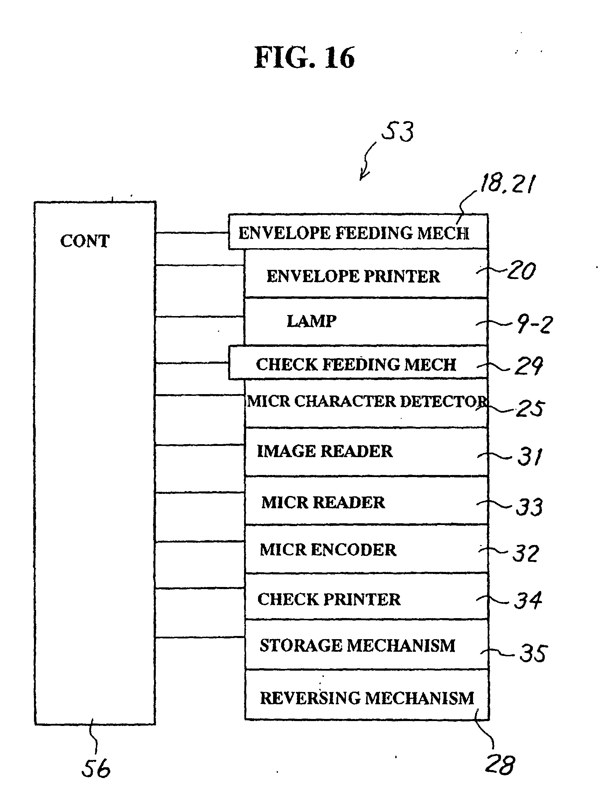

Fig. 15 shows in block form a system arrangement of the automatic transaction apparatus shown in Fig. 1, and Fig. 16 shows in block form a deposition processing unit of the system arrangement shown in Fig. 15.

As shown in Fig. 15, the system arrangement includes a main controller 50, which comprises a processor, connected to a memory 51 that stores a program and data for the main controller 50. A host computer interface 52 connected to the main controller 50 communicates with a host computer (not shown).

The customer-operated console 1 and the card processing unit 4 (see Fig. 1) are connected through a bus 55 to the main controller 50. The withdrawal processing unit 6 (see Fig. 1) is connected through the bus 55 to the main controller 50. The system arrangement also includes a deposit processing 53 for processing deposits from the depository inlet 7. The deposit processing unit 53 is connected through the bus 55 to the main controller 50. The deposit processing unit 53 will be described in detail below with reference to Fig. 16.

A receipt issuing unit 54 for issuing receipts is connected through the bus 55 to the main controller 50.

As shown in Fig. 16, the deposit processing unit 53 has a controller 56 which comprises a microprocessor. The controller 56 serves to control an envelope feed mechanism including the feed rollers 18, 21 (see Fig. 2).

The envelope printer 20 shown in Fig. 2 is controlled by the controller 56. The backlight lamp 9-2 shown in Fig. 3 is also controlled by the controller 56. A check feed mechanism, which includes the transverse shifting rollers 26 and the feed rollers 29 (see Fig. 2), is also controlled by the controller 56.

The magnetic sensor (MICR character detector) 25 described with reference to Fig. 2 is connected to the controller 56. The image reader 31 described with reference to Fig. 2 reads an image of the check 100 and sends the image to the controller 56. The magnetic reader (MICR reader) 33 described with reference to Fig. 2 reads the MICR column of the check 100 and sends the read information to the controller 56.

The encoder (MICR encoder) 32 described with reference to Fig. 2 is controlled by the controller 56 to print MICR characters on the check 100. The printing mechanism (check printer) 34 described with reference to Fig. 2 is controlled by the controller 56 to print information on the check 100. The storage mechanism 35 described with reference to Fig. 2 is controlled by the controller 56 to store checks into desired storage chambers in the storage bin 23.

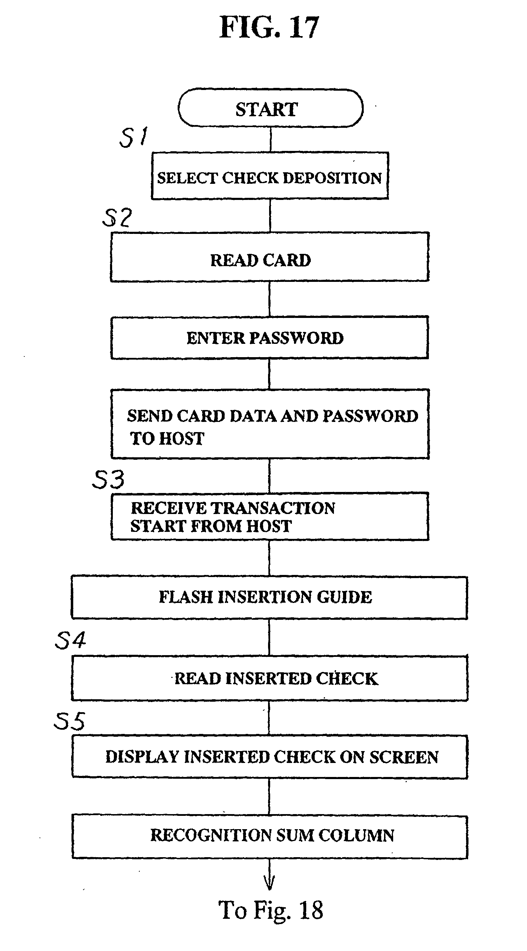

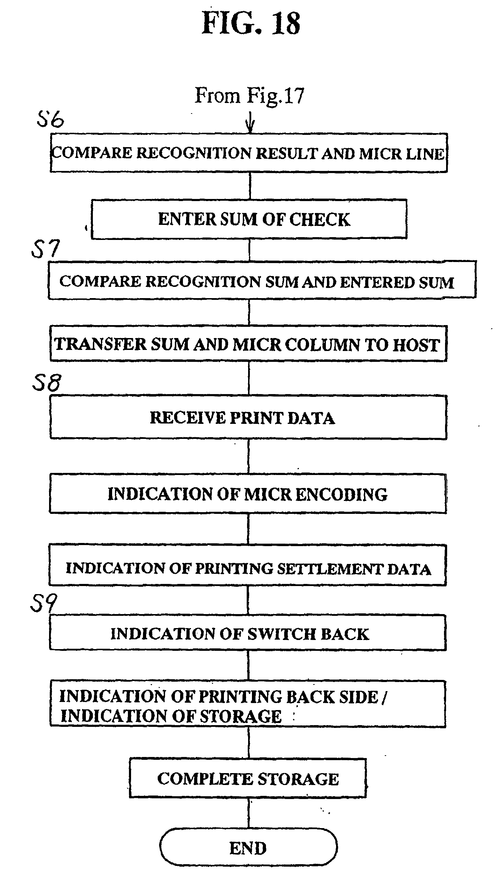

An operation sequence of the system arrangement shown in Figs. 15 and 16 will be described below with reference to Figs. 17 through 23. Numerals with a prefix "S" shown in Figs. 17 and 18 indicate certain steps of the operation sequence.

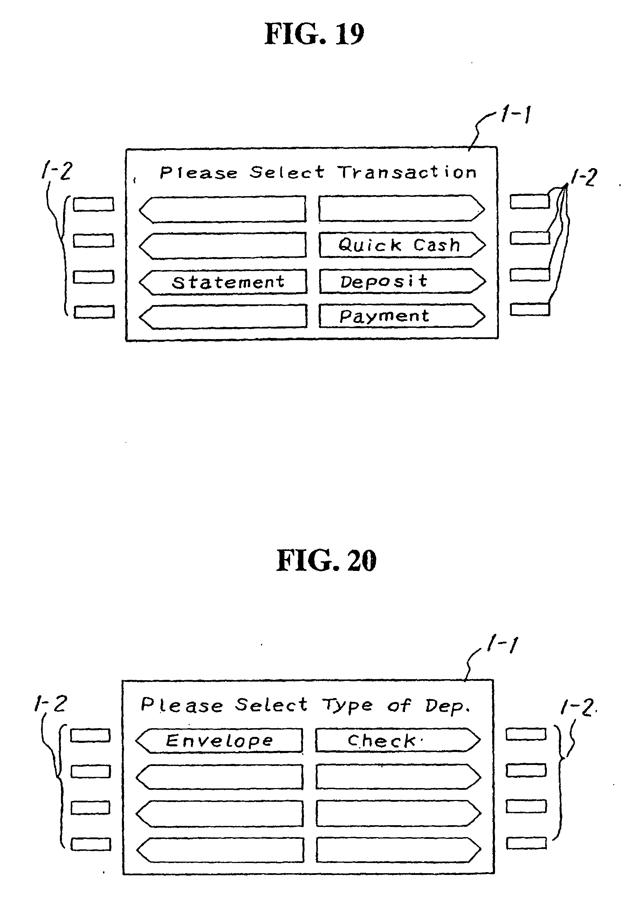

(S1) The main controller (hereinafter referred to as a processor) 50 displays a transaction selection image shown in Fig. 19 on the display unit 1-1 of the customer-operated console 1. The customer can select transaction items including withdrawal transactions (Quick Cash, Payment), a deposition transaction (Deposit), etc. from the displayed transaction selection image. The customer presses a suitable one of the switches 1-2 to select a desired one of the transaction items.

When the customer selects the deposition transaction, the processor 50 displays a deposition type selection image shown in Fig. 20 on the display unit 1-1 of the customer-operated console 1. The customer selects a deposition type using an envelope or a deposition type using a check from the displayed deposition type selection image. The presses a suitable one of the switches 1-2 to select a desired one of the deposition types.

(S2) If the customer selects the deposition type using a check, then the processor 50 instructs the card processing unit 4 to read the customer's card. The cus-tomer inserts the card into the card processing unit 4. The card processing unit 4 reads the inserted card and sends card data to the processor 50.

The processor 50 then displays a password entrance image on the display unit 1-1 of the customer-operated console 1. The customer enters the password using the keys 1-3. The processor 50 transfers the card data and the password to the host computer. The host computer decides whether the transaction is to be permitted or not on the basis of the card data and the password which have been received from the processor 50.

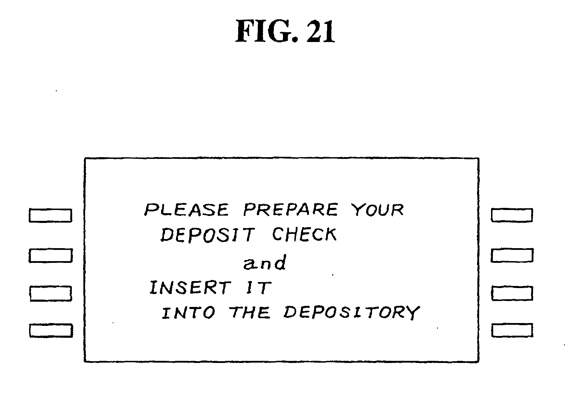

(S3) When the host computer decides to permit the transaction, the host computer sends a transaction starting message to the processor 50. Upon reception of the transaction starting message from the host computer, the processor 50 displays a check insertion guidance image shown in Fig. 21 on the display unit 1-1 of the customer-operated console 1. The processor 50 instructs the controller 56 to flash the backlight lamp 9-2 in the depository inlet 7, whereupon the insertion guidance panel 9-1 is flashed indicating to the customer a proper direction and position in which to insert a check 100. The processor 50 moves the selector lever 17 to select the check feed path 11.

(S4) The processor 50 instructs the controller 56 to read the check 100. As shown in Fig. 2, the check 100 which has been inserted is fed along the check feed path 11, checked for the direction in which it has been inserted, and thereafter transversely shifted. The check 100 is then introduced into the second feed path 12. While being fed along the second feed path 12, the check 100 is read in its entirety by the image reader 31, and thereafter the MICR column 101 of the check 100 is magnetically read by the magnetic reader 33. The processor 50 instructs the controller 56 to stop flashing the backlight lamp 9-2.

(S5) The processor 50 instructs the controller 56 to transfer image data. The controller 56 transfers the image data read by the image reader 31 to the processor 50. The processor 50 then displays an image represented by the transferred image data on the display unit 1-1 of the customer-operated console 1. The customer can now confirm the inserted check 100 on the display unit 1-1.

While the inserted check 100 is being confirmed by the customer, the processor 50 recognizes the characters representing the sum of the check 100 and contents of the MICR column 101 (the code of the banking institution which has issued the check 100, the code of the issuer, and the issuance serial number) from the image data of the sum column 104 of the check 100 and the image data of the MICR column 114 of the check 100.

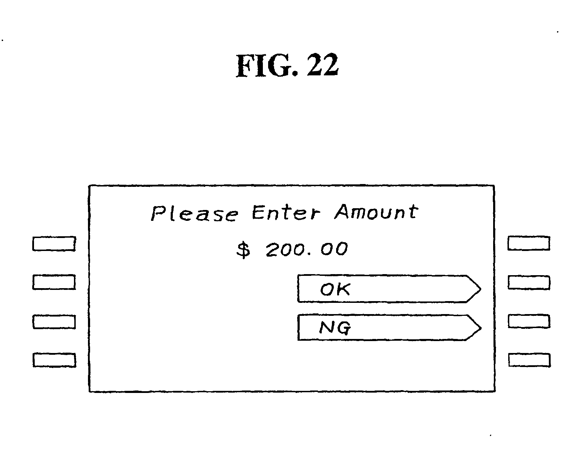

(S6) The processor 50 compares the contents of the MICR column 101 as read by the magnetic reader 33 and the contents of the MICR column 101 whose characters have been recognized by the processor 50. If the compared contents are not in agreement with each other, then the processor 50 returns the inserted check 100 to the depository inlet 7. If the compared contents are in agreement with each other, then the processor 50 displays a sum entrance guidance image shown in Fig. 22 on the display unit 1-1 of the customer-operated console 1. The customer enters the sum of the check 100 using the keys 1-3.

(S7) The processor 50 compares the recognized sum and the entered sum with each other. If the compared sums are not in agreement with each other, then the processor 50 returns the inserted check 100 to the depository inlet 7. If the compared sums are in agreement with each other, then the processor 50 transfers the sum of the check 100 and the contents of the MICR column 101 to the host computer.

(S8) The host computer settles the check 100, and transfers print data to the processor 50. The processor 50 instructs the controller 56 to encode the sum as MICR data. The MICR encoder 32 prints encoded MICR sum data, among other print data, in an encoded column 107 (see Fig. 23) of the check 100.

Then, the processor 50 instructs the controller 56 to print settlement data (the date of transaction, the account number, etc.) on the check 100. The printing mechanism 34 prints the settlement data, among other print data, in a settlement data column 108 (see Fig. 23) of the check 100.

(S9) If the back side of the check 100 is to be printed, i.e., if the check 100 is to be endorsed, then the processor 50 instructs the controller 56 to switch back the check 100 for thereby reversing the check 100. The controller 56 controls the check feed mechanism to reverse the check 100 upside down as described above with reference to Figs. 13 and 14.

Then, the processor 50 instructs the controller 56 to print back-side data (the date of transaction, the account number, the sum) on the back side of the check 100. The printing mechanism 34 now prints the back-side data on the back side of the check 100. The processor 50 thereafter instructs the controller 56 to store the check 100. The controller 56 controls the check feed mechanism and the storage mechanism 35 to store the check 23 into the storage bin 23, as shown in Figs. 10 through 12. The controller 56 then indicates the completion of the check storing action to the processor 50. The process of depositing the check 100 is now finished.

Since the depository inlet 7 is combined with the insertion guidance panel 9-1 that can be illuminated by the backlight lamp 9-2, the user can be guided by the insertion guidance panel 9-1 as to the face side of the check 100 which is to be directed upwardly at the depository inlet 7 and the orientation in which the check 100 is to be inserted into the depository inlet 7, and also as to the position where the check 100 is to be inserted into the depository inlet 7. Since the user is guided to insert the check 100 in a proper direction and at a proper position into the depository inlet 7, the check deposition mechanism of the automatic transaction apparatus may be relatively simple in structure and may process the inserted check 100 within a relatively short period of time.

The insertion guidance panel 9-1 may be continuously turned on or flashed by the backlight lamp 9-2 when the user wants to deposit the check 100. Therefore, the user can easily recognize the inlet slot for insertion of the check 100, the position in which to insert the check 100, and the orientation in which to insert the check 100.

While the depository inlet 7 is also used to insert envelopes, the insertion guidance panel 9-1 is positioned so as to indicate, to the user, the position to insert the check 100 which is narrower than envelopes. Accordingly, the user is guided to recognize the proper position in which to insert the check 100 in contrast to the position in which to insert envelopes. Because the check 100 is inserted through the proper position, the check deposition mechanism may be relatively simple in structure as it does not need to receive checks inserted in different positions and/or orientations.

The automatic transaction apparatus has the mechanism for detecting the manner in which checks have been inserted, so that only those checks which are properly inserted can be introduced into the check deposition mechanism. Furthermore, since the inserted check 100 is strongly transversely shifted in the first feed path 11, the transverse shifting of the check 100 is completed before the check 100 is fed into the second feed path 12. In the second feed path 12, the check 100 that has already been transversely shifted in the first feed path 11 is weakly transversely shifted and hence remains transversely shifted while being fed along the second feed path 12.

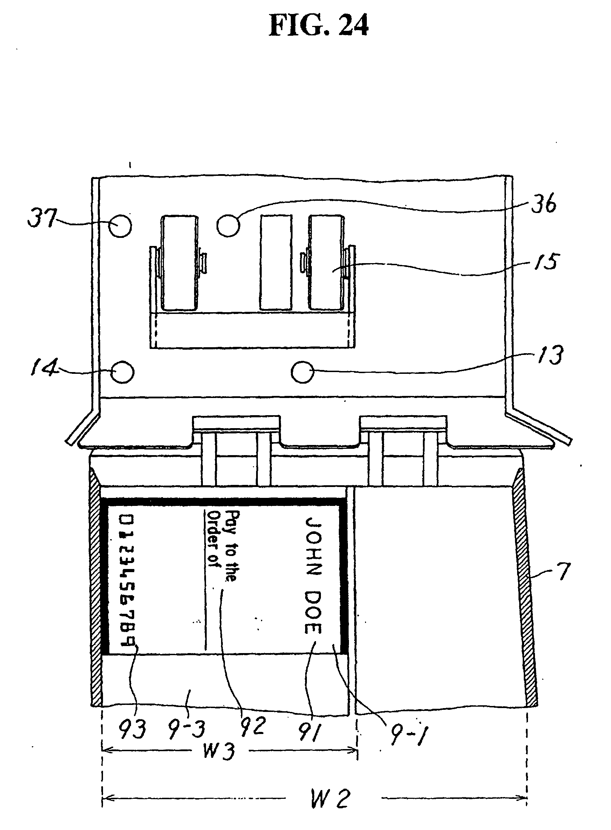

Figs. 24, 25, 26A, and 26B show a depository structure according to another embodiment of the present invention. Those parts shown in Figs. 24, 25, 26A, and 26B which are identical to those shown in Fig. 4 are denoted by identical reference numerals, and will not be described in detail below.

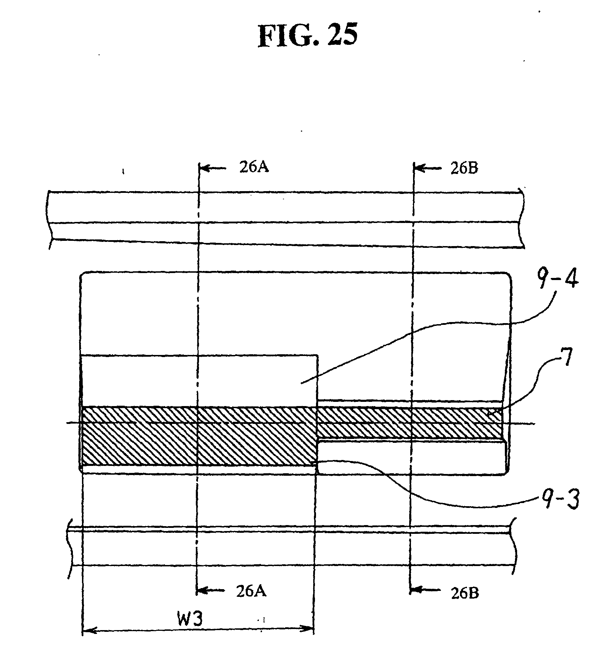

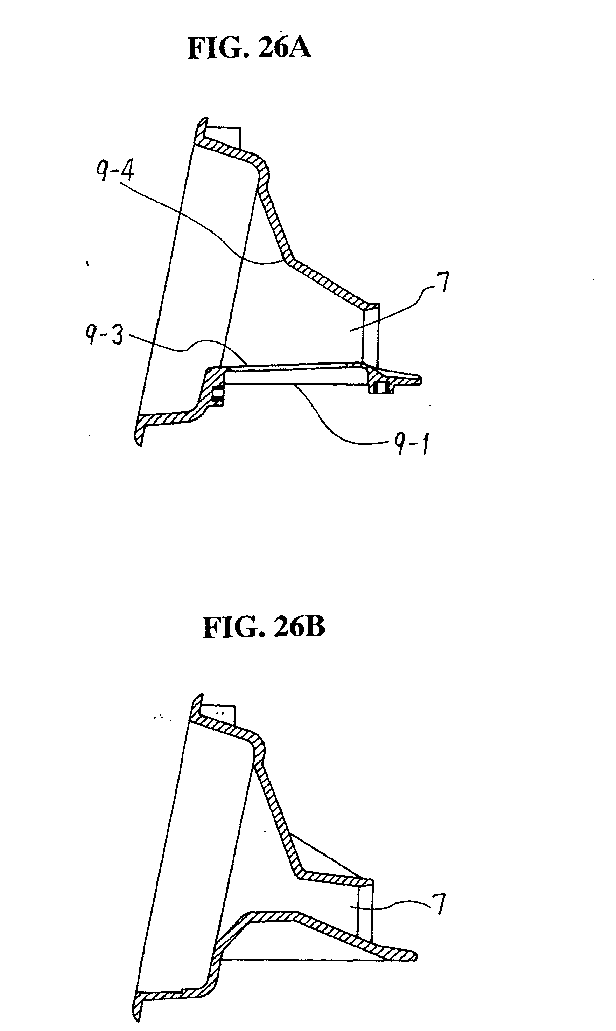

As shown in Fig. 24, the insertion guidance panel 9-1 has a width W3 equal to the width of personal checks that are used most often, plus the width of a clearance. The insertion guidance panel 9-1 is positioned such that its left edge, as viewed from above, is aligned with the left edge of the depository inlet 7. As shown in Figs. 25, 26A, and 26B, the depository inlet 7 has an upper guide slot 9-4 and a lower guide slot 9-3, which are aligned with the insertion guidance panel 9-1. Each of the upper and lower guide slots 9-4, 9-3 has a width equal to the width W3 of the insertion guidance panel 9-1. The insertion guidance panel 9-1 is positioned beneath the lower guide slot 9-3.

The insertion guidance panel 9-1 indicates thereon a pattern on the face of the personal check 100 (see Fig. 23). Specifically, the insertion guidance panel 9-1 indicates thereon a column 91 showing an issuer's name, a column 92 showing a party to which the check is payable, and an MICR column 93.

When the check 100 is inserted into the depository inlet 7, the check 100 is guided through the upper and lower guide slots 9-4, 9-3. Therefore, the check 100 can be inserted at a proper position into the depository inlet 7, and hence the check deposition mechanism may be relatively simple in structure as it does not need to receive checks inserted in different positions.

In the illustrated embodiments, the check 100 has been described as a financial document that can be handled by the automatic transaction apparatus. However, the automatic transaction apparatus may process other financial documents such as money transfer slips.

The automatic transaction apparatus has been illustrated as being capable of handling both deposits and withdrawals. However, the present invention is also applicable to an automatic transaction apparatus which can process deposits only.

The automatic transaction apparatus according to the present invention offers the following advantages:

The guidance mechanism 9 indicates a proper pattern for inserting financial documents at the depository inlet 7. According to the proper pattern indicated by the guidance mechanism 9, the user can insert a financial document with its opposite sides properly directed and in a proper orientation. Since financial documents are properly inserted into the automatic transaction apparatus, they can automatically be deposited by a relatively simple deposition mechanism including readers and a printing mechanism.

The automatic transaction apparatus can process deposits in the form of financial documents in a relatively short period of time for the convenience of users.

Although certain preferred embodiments of the present invention have been shown and described in detail, it should be understood that various changes and modifications may be made therein without departing from the scope of the appended claims.

## Claims

1. An automatic transaction apparatus (1) for automatically settling a financial document deposited by a user, comprising:
a depository inlet (7) for receiving a financial document deposited by a user;
document feed means (11) for feeding the financial document received by said depository inlet;
reading means (31,33) for reading transaction data from the financial document;
printing means (34) for printing a transactional result on the financial document; and
storage means for (23) storing the financial document;
**characterised in that** said depository inlet has a width suitable for receiving an envelope enclosing a deposit, said width being wider than the financial document, and **in that** said apparatus further includes:
guidance means (9-1) having a smaller width than the depository inlet and positioned in the depository inlet in such a way as to indicate a proper direction and position in which to insert the financial document into the depository inlet;
envelope feeding (10) means for feeding the envelope received by said depository inlet to said storage means (23); and
selecting means (1-2) operable by the user, for selecting either a financial document settling mode to settle the financial document or an envelope processing mode to process said envelope; and
gate means (17) responsive to selection of said envelope processing mode by the user through said selecting means, for delivering the envelope inserted into said depository inlet to said envelope feeding means, and also responsive to selection of said financial document settling mode by the user through said selecting means, for delivering the financial document inserted into said depository inlet to said document feed means.
and wherein said document feed means comprises:
a first feed path (11) for feeding the financial document from said depository inlet to a first position; and
a second feed path (12) feeding the financial document from said first position through said reading means, said printing means, and said storage means back to said first position;
said first feed path having a first transversely shifting mechanism (26) for transversely shifting the financial document under a relatively strong force;
said second feed path having a second transversely shifting mechanism (29) for transversely shifting the financial document under a relatively weak force.

2. An automatic transaction apparatus according to claim 1, wherein said guidance means comprises:
a display panel for indicating said pattern to insert the financial document into said depository inlet; and
light-emitting means for illuminating said display panel.

3. An automatic transaction apparatus according to claim 2, further comprising:
selecting means operable by the user, for selecting a financial document settling mode to settle the financial document; and
control means for energizing said light-emitting means in response to selection of said financial document settling mode by the user through said selecting means.

4. An automatic transaction apparatus according to claim 1, 2, or 3, wherein said guidance means has a guide for guiding the financial document.

5. An automatic transaction apparatus according to claim 4, further comprising:
selecting means operable by the user, for selecting either a financial document settling mode to settle the financial document or an envelope processing mode to process said envelope; and
control means for controlling the gate means in accordance with a selected mode by the selecting means.

6. An automatic transaction apparatus according to any preceding claim, wherein said guidance means is disposed in said depository inlet for indicating a position at which to insert the financial document into said depository inlet.

7. An automatic transaction apparatus according to any preceding claim, further comprising:
detecting means disposed between said depository inlet and said reading means, for detecting the manner in which the financial document has been inserted from said depository inlet; and
control means for returning the financial document to said depository inlet when the financial document has improperly been inserted from said depository inlet as detected by said detecting means.

8. An automatic transaction apparatus according to claim 7, wherein said document feed means comprises:
a first feed path for feeding the financial document from said depository inlet to a first position;
a second feed path feeding the financial document from said first position through said reading means, said printing means, and said storage means back to said first position; and
a switching gate disposed in said first position for reversing the financial document upside down.

9. An automatic transaction apparatus according to any preceding claim, further comprising:
card reading means for reading a card which has recorded transaction data of a user;
input means operable by the user for selecting a deposition transaction or a withdrawal transaction;
withdrawing means for withdrawing cash in an amount indicated by the user through said input means; and
control means for receiving the financial document from said depository inlet in response to selection of the deposition transaction.

10. An automatic transaction apparatus according to any preceding claim, wherein said reading means comprises:
a magnetic reader for reading magnetic information of the financial document; and
an image reader for optically reading the financial document;
said printing means having a printing mechanism for printing the financial document with magnetic ink.

11. An automatic transaction apparatus according to claim 4, wherein said guide is disposed in a lower portion of said depository inlet,

12. An automatic transaction apparatus according to claim 4, wherein said guide is disposed in each of upper and lower portions of said depository inlet.

## Patentansprüche

1. Automatische Transaktionsvorrichtung (1) zum automatischen Bearbeiten eines Finanzdokuments, das durch einen Benutzer deponiert wurde, mit:
einem Deponierungseinlaß (7) zum Aufnehmen eines Finanzdokuments, das durch einen Benutzer deponiert wird;
einem Dokumentzufuhrmittel (11) zum Zuführen des Finanzdokuments, das durch den Deponierungseinlaß aufgenommen wurde;
einem Lesemittel (31, 33) zum Lesen von Transaktionsdaten von dem Finanzdokument;
einem Druckmittel (34) zum Drucken eines Transaktionsresultats auf das Finanzdokument; und
einem Speichermittel (23) zum Speichern des Finanzdokuments;
**dadurch gekennzeichnet, daß** der Deponierungseinlaß eine Breite hat, die zum Aufnehmen eines Umschlags geeignet ist, der eine Deponierung umgibt, welche Breite breiter als das Finanzdokument ist, und daß die Vorrichtung ferner enthält:
ein Führungsmittel (9-1), das eine kleinere Breite als der Deponierungseinlaß hat und in dem Deponierungseinlaß auf solch eine Weise angeordnet ist, um eine korrekte Richtung und Position anzugeben, in der das Finanzdokument in den Deponierungseinlaß einzuführen ist;
ein Umschlagzufuhrmittel (10) zum Zuführen des Umschlags, der durch den Deponierungseinlaß aufgenommen wurde, zu dem Speichermittel (23); und
ein Selektionsmittel (1-2), das durch den Benutzer bedienbar ist, zum Selektieren entweder eines Finanzdokumentbearbeitungsmodus, um das Finanzdokument zu bearbeiten, oder eines Umschlagverarbeitungsmodus, um den Umschlag zu verarbeiten; und
ein Gattermittel (17), das auf die Selektion des Umschlagverarbeitungsmodus durch den Benutzer über das Selektionsmittel reagiert, zum Befördern des Umschlags, der in den Deponierungseinlaß eingeführt wurde, zu dem Umschlagzufuhrmittel, und auch auf die Selektion des Finanzdokumentbearbeitungsmodus durch den Benutzer über das Selektionsmittel reagiert, zum Befördern des Finanzdokuments, das in den Deponierungseinlaß eingeführt wurde, zu dem Dokumentzufuhrmittel,
und bei der das Dokumentzufuhrmittel umfaßt:
einen ersten Zufuhrweg (11) zum Zuführen des Finanzdokuments von dem Deponierungseinlaß zu einer ersten Position; und
einen zweiten Zufuhrweg (12), der das Finanzdokument von der ersten Position über das Lesemittel, das Druckmittel und das Speichermittel zu der ersten Position zurückführt;
welcher erste Zufuhrweg einen ersten Transversalverschiebungsmechanismus (26) hat, zum transversalen Verschieben des Finanzdokuments unter einer relativ starken Kraft;
welcher zweite Zufuhrweg einen zweiten Transversalverschiebungsmechanismus (29) hat, zum transversalen Verschieben des Finanzdokuments unter einer relativ schwachen Kraft.

2. Automatische Transaktionsvorrichtung nach Anspruch 1, bei der das Führungsmittel umfaßt:
ein Anzeigefeld zum Angeben des Musters, um das Finanzdokument in den Deponierungseinlaß einzuführen; und
ein Lichtemissionsmittel zum Beleuchten des Anzeigefeldes.

3. Automatische Transaktionsvorrichtung nach Anspruch 2, ferner mit:
einem Selektionsmittel, das durch den Benutzer bedienbar ist, zum Selektieren eines Finanzdokumentbearbeitungsmodus, um das Finanzdokument zu bearbeiten; und
einem Steuermittel zum Erregen des Lichtemissionsmittels in Antwort auf die Selektion des Finanzdokumentbearbeitungsmodus durch den Benutzer über das Selektionsmittel.

4. Automatische Transaktionsvorrichtung nach Anspruch 1, 2 oder 3, bei der das Führungsmittel eine Führung zum Führen des Finanzdokuments hat.

5. Automatische Transaktionsvorrichtung nach Anspruch 4, ferner mit:
einem Selektionsmittel, das durch den Benutzer bedienbar ist, zum Selektieren entweder eines Finanzdokumentbearbeitungsmodus, um das Finanzdokument zu bearbeiten, oder eines Umschlagverarbeitungsmodus, um den Umschlag zu verarbeiten; und
einem Steuermittel zum Steuern des Gattermittels gemäß einem durch das Selektionsmittel selektierten Modus.

6. Automatische Transaktionsvorrichtung nach irgendeinem vorhergehenden Anspruch, bei der das Führungsmittel in dem Deponierungseinlaß zum Angeben einer Position angeordnet ist, an der das Finanzdokument in den Deponierungseinlaß einzuführen ist.

7. Automatische Transaktionsvorrichtung nach irgendeinem vorhergehenden Anspruch, ferner mit:
einem Detektionsmittel, das zwischen dem Deponierungseinlaß und dem Lesemittel angeordnet ist, zum Detektieren der Art und Weise, in der das Finanzdokument von dem Deponierungseinlaß eingeführt worden ist; und
einem Steuermittel zum Zurückführen des Finanzdokuments zu dem Deponierungseinlaß, wenn das Finanzdokument laut Detektion durch das Detektionsmittel von dem Deponierungseinlaß unkorrekt eingeführt worden ist.

8. Automatische Transaktionsvorrichtung nach Anspruch 7, bei der das Dokumentzufuhrmittel umfaßt:
einen ersten Zufuhrweg zum Zuführen des Finanzdokuments von dem Deponierungseinlaß zu einer ersten Position; und
einen zweiten Zufuhrweg, der das Finanzdokument von der ersten Position über das Lesemittel, das Druckmittel und das Speichermittel zu der ersten Position zurückführt; und
ein Schaltgatter, das an der ersten Position angeordnet ist, zum Umdrehen des Finanzdokuments, so daß es mit der Oberseite nach unten zeigt.

9. Automatische Transaktionsvorrichtung nach irgendeinem vorhergehenden Anspruch, ferner mit:
einem Kartenlesemittel zum Lesen einer Karte, auf der Transaktionsdaten eines Benutzers aufgezeichnet sind;
einem Eingabemittel, das durch den Benutzer bedienbar ist, zum Selektieren einer Deponierungstransaktion oder einer Abhebungstransaktion;
einem Abhebungsmittel zum Abheben von Bargeld in einem Betrag, der durch den Benutzer über das Eingabemittel angegeben wurde; und
einem Steuermittel zum Aufnehmen des Finanzdokuments von dem Deponierungseinlaß in Antwort auf die Selektion der Deponierungstransaktion.

10. Automatische Transaktionsvorrichtung nach irgendeinem vorhergehenden Anspruch, bei der das Lesemittel umfaßt:
einen Magnetleser zum Lesen von magnetischen Informationen des Finanzdokuments; und
einen Bildleser zum optischen Lesen des Finanzdokuments;
welches Druckmittel einen Druckmechanismus zum Bedrucken des Finanzdokuments mit magnetischer Tinte hat.

11. Automatische Transaktionsvorrichtung nach Anspruch 4, bei der die Führung in einem unteren Abschnitt des Deponierungseinlasses angeordnet ist.

12. Automatische Transaktionsvorrichtung nach Anspruch 4, bei der die Führung in jedem der oberen und unteren Abschnitte des Deponierungseinlasses angeordnet ist.

## Revendications

1. Appareil de transaction automatique (1) pour traiter de manière automatique un document financier qui est déposé par un utilisateur, comprenant :
une entrée de dépôt (7) pour recevoir un document financier qui est déposé par un utilisateur ;
un moyen d'alimentation en document (11) pour alimenter le document financier qui est reçu au moyen de ladite entrée de dépôt ;
un moyen de lecture (31, 33) pour lire des données de transaction à partir du document financier ;
un moyen d'impression (34) pour imprimer un résultat de transaction sur le document financier ; et
un moyen de stockage (23) pour stocker le document financier,
**caractérisé en ce que** ladite entrée de dépôt présente une largeur qui convient pour recevoir une enveloppe qui renferme un dépôt, ladite largeur étant plus large que le document financier, et **en ce que** ledit appareil inclut en outre :
un moyen de guidage (9-1) qui présente une largeur inférieure à celle de l'entrée de dépôt et qui est positionné dans l'entrée de dépôt de manière à indiquer une direction appropriée et une position appropriée selon lesquelles il convient d'insérer le document financier à l'intérieur de l'entrée de dépôt ;
un moyen d'alimentation en enveloppe (10) pour alimenter l'enveloppe qui est reçue au moyen de ladite entrée de dépôt jusqu'audit moyen de stockage (23) ; et
un moyen de sélection (1-2) actionnable par l'utilisateur pour sélectionner soit un mode traitement de document financier pour traiter le document financier, soit un mode traitement d'enveloppe pour traiter ladite enveloppe ; et
un moyen de porte (17) qui est sensible à une sélection dudit mode traitement d'enveloppe par l'utilisateur par l'intermédiaire dudit moyen de sélection pour délivrer l'enveloppe qui est insérée dans ladite entrée de dépôt audit moyen d'alimentation en enveloppe et qui est également sensible à une sélection dudit mode traitement de document financier par l'utilisateur par l'intermédiaire dudit moyen de sélection pour délivrer le document financier qui est inséré dans ladite entrée de dépôt audit moyen d'alimentation en document ; et dans lequel
ledit moyen d'alimentation en document comprend :
une première voie d'alimentation (11) pour alimenter le document financier depuis ladite entrée de dépôt jusqu'à une première position ; et
une seconde voie d'alimentation (12) pour alimenter le document financier depuis ladite première position au travers dudit moyen de lecture, dudit moyen d'impression et dudit moyen de stockage et retour jusqu'à ladite première position ;
ladite première voie d'alimentation comportant un premier mécanisme de décalage transversal (26) pour décaler transversalement le document financier sous une force relativement forte ; et
ladite seconde voie d'alimentation comportant un second mécanisme de décalage transversal (29) pour décaler transversalement le document financier sous une force relativement faible.

2. Appareil de transaction automatique selon la revendication 1, dans lequel ledit moyen de guidage comprend :
un panneau d'affichage pour indiquer ledit motif pour insérer le document financier dans ladite entrée de dépôt ; et
un moyen émetteur de lumière pour éclairer ledit panneau d'affichage.

3. Appareil de transaction automatique selon la revendication 2, comprenant en outre :
un moyen de sélection actionnable par l'utilisateur pour sélectionner un mode traitement de document financier pour traiter le document financier ; et
un moyen de commande pour alimenter ledit moyen émetteur de lumière en réponse à une sélection dudit mode traitement de document financier par l'utilisateur par l'intermédiaire dudit moyen de sélection.

4. Appareil de transaction automatique selon la revendication 1, 2 ou 3, dans lequel ledit moyen de guidage comporte un guide pour guider le document financier.

5. Appareil de transaction automatique selon la revendication 4, comprenant en outre :
un moyen de sélection actionnable par l'utilisateur pour sélectionner soit un mode traitement de document financier pour traiter le document financier, soit un mode traitement d'enveloppe pour traiter ladite enveloppe ; et
un moyen de commande pour commander le moyen de porte conformément à un mode sélectionné au moyen du moyen de sélection.

6. Appareil de transaction automatique selon l'une quelconque des revendications précédentes, dans lequel ledit moyen de guidage est disposé dans ladite entrée de dépôt pour indiquer une position à laquelle il convient d'insérer le document financier dans ladite entrée de dépôt.

7. Appareil de transaction automatique selon l'une quelconque des revendications précédentes, comprenant en outre :
un moyen de détection qui est disposé entre ladite entrée de dépôt et ledit moyen de lecture pour détecter la manière selon laquelle le document financier a été inséré depuis ladite entrée de dépôt ; et
un moyen de commande pour retourner le document financier jusqu'à ladite entrée de dépôt lorsque le document financier a été inséré de façon impropre depuis ladite entrée de dépôt comme détecté par ledit moyen de détection.

8. Appareil de transaction automatique selon la revendication 7, dans lequel ledit moyen d'alimentation en document comprend :
une première voie d'alimentation pour alimenter le document financier depuis ladite entrée de dépôt jusqu'à une première position ;
une seconde voie d'alimentation pour alimenter le document financier depuis ladite première position au travers dudit moyen de lecture, dudit moyen d'impression et dudit moyen de stockage et retour jusqu'à ladite première position ; et
une porte de commutation qui est disposée à ladite première position pour inverser le document financier haut et bas.

9. Appareil de transaction automatique selon l'une quelconque des revendications précédentes, comprenant en outre :
un moyen de lecture de carte pour lire une carte qui a enregistré des données de transaction d'un utilisateur ;
un moyen d'entrée pouvant être actionné par l'utilisateur pour sélectionner une transaction de dépôt ou une transaction de retrait ;
un moyen de retrait pour retirer de l'argent liquide selon un montant qui est indiqué par l'utilisateur par l'intermédiaire dudit moyen d'entrée ; et
un moyen de commande pour recevoir le document financier en provenance de ladite entrée de dépôt en réponse à la sélection de la transaction de dépôt.

10. Appareil de transaction automatique selon l'une quelconque des revendications précédentes, dans lequel ledit moyen de lecture comprend :
un lecteur magnétique pour lire une information magnétique du document financier ; et
un lecteur d'image pour lire optiquement le document financier ;
ledit moyen d'impression comportant un mécanisme d'impression pour imprimer le document financier à l'aide d'une encre magnétique.

11. Appareil de transaction automatique selon la revendication 4, dans lequel ledit guide est disposé dans une partie inférieure de ladite entrée de dépôt.

12. Appareil de transaction automatique selon la revendication 4, dans lequel ledit guide est disposé dans chacune des parties supérieure et inférieure de ladite entrée de dépôt.
